Europäisches Patentamt

European Patent Office

Office européen des brevets

(11) Publication number: **0 142 250**
**B1**

(12) **EUROPEAN PATENT SPECIFICATION**

(45) Date of publication of patent specification: **21.03.90**

(21) Application number: **84306392.6**

(22) Date of filing: **19.09.84**

(51) Int. Cl.⁵: **G 02 B 5/124, B 05 D 5/06, B 05 D 7/26, B 44 F 1/04, B 44 F 1/02**

(54) Retroreflective sheeting and methods for making same.

(30) Priority: **19.09.83 US 533068**

(43) Date of publication of application: **22.05.85 Bulletin 85/21**

(45) Publication of the grant of the patent: **21.03.90 Bulletin 90/12**

(84) Designated Contracting States: **BE DE FR GB IT NL SE**

(56) References cited:
US-A-2 481 757
US-A-3 649 352
US-A-3 894 791
US-A-3 924 929
US-A-4 025 159
US-A-4 367 920

(73) Proprietor: **AMERACE CORPORATION**
**555 Fifth Avenue**
**New York, NY 10017 (US)**

(72) Inventor: **Pricone, Robert M.**
**29 Lindon Lane, Vernon Hills**
**Illinois 60061 (US)**
Inventor: **Roberts, William N.**
**7222 W. Crain Street Niles, Illinois 60648**
**County of Cook (US)**

(74) Representative: **Freed, Arthur Woolf et al**
**MARKS & CLERK 57-60 Lincoln's Inn Fields**
**London WC2A 3LS (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

Retroreflective sheeting has particular use in making highway signs, street signs and the like, and is now employed extensively. The Federal government has recognized two primary types of retroreflective sheeting: glass bead and cube-corner. Such approved sheeting materials are found in a specification entitled "FP-79", published by the U.S. Department of Transportion Federal Highway Administration. Specification FP-79 presently has been adopted as a purchasing standard by many State Highway Departments, and it sets forth certain minimum specifications which must be met by retroreflective sheeting of the cube-corner type. Included among the specified characteristics are those for reflectivity, color, flexibility of material, and resistance to cracking and weathering.

Cube-corner type reflector elements generally provide a higher specific intensity at 0.2° observation angle and 0° entrance angle than do glass bead type reflector elements, but, to applicants' knowledge, no one successfully has furnished a sheeting material which will meet the requirements for the Class IIIB sheeting set forth in the aforementioned FP-79 specification in commercial quantitites. It therefore is a primary object of the present invention to provide a unique sheeting product which will meet such specified criteria and which can be produced in accordance with the novel methods disclosed herein in an economical fashion and in commercial quantities.

Retroreflectivity is achieved by cube-corner type reflector elements primarily through the principle of total internal reflection. It is well known that any surface contact made by another material with the faces of the cube-corner elements generally has a deleterious effect on the reflectiveness of the reflector element.

However, when all of the element faces are metallized, or mirrored, then, rather than relying upon total internal reflection, retroreflection is achieved by specular reflection from the mirrored faces. Generally, metallizing will provide a grayish or black coloration under certain daylight conditions and may also generally reduce reflectivity under night-time conditions vis-a-vis unmetallized cube-corner type elements.

The present invention relates generally to methods and apparatus for producing retroreflective sheeting constructions and, more particularly, to methods and apparatus for producing a flexible laminate sheeting construction including an upper thermoplastic sheet, the reverse of which is provided with a repeating, retroreflecting pattern of fine or precise detail, a back coating to protect the formed pattern, and an intermediate layer allowing bonding of the back coating to overlay the formed pattern on the thermoplastic sheet while preserving and enhancing the retroreflective properties of both the formed pattern and the laminated sheet. More precisely, the present invention is applicable to the production of cube-corner type retroreflective sheeting laminates.

Within the art of designing reflectors and retroreflective material, the terms "cube-corner" or "trihedral", or "tetrahedral" are recognized in the art as describing structure or patterns consisting of three mutually perpendicular faces, not limited to any particular size or shape of the faces, or the orientation of the optical axis of the cube-corner element. Each of the cube-corner faces can assume a different size and shape relative to the others, depending upon the angular reflective response characteristics desired, and the cube forming techniques employed.

Examples of prior cube-corner type reflectors may be found in U.S. Patent No. 1,906,655, issued to *Stimson*, and U.S. Patent No. 4,073,568, issued to *Heasley*. *Stimson* shows a reflex light reflector including an obverse face and a reverse light-reflecting face consisting of a plurality of cube-corner type reflector elements with each such element having three mutually perpendicular surfaces adapted for total internal reflection of light impinging thereon from the obverse face. *Heasley* describes a cube-corner type reflector in the form of a rectangular parallelpiped.

It long has been desired to obtain the benefits of cube-corner reflective properties in the form of flexible sheeting. As noted above, one advantageous aspect of such sheeting is in the manufacture of highway and street signs, markers and the like, where graphics are printed, painted, silk-screened or otherwise applied to a highly reflective substrate mounted to a flat, stiff, supportive surface. Flexible retroreflective sheeting, when used as such a substrate, can be stored and shipped while wound onto rolls, and can readily be cut or otherwise formed into the desired shape and size required for a particular application. The reflective nature of the sheeting allows such signs, markers, and the like to reflect light from a vehicle's headlights, permitting the item to be read by the driver, without requiring a permanent light source to illuminate the sign or marker.

Production of such retroreflective sheeting has been made practicable by apparatus and methods to form precise cube-corner patterns in greatly reduced sizes on flexible thermoplastic sheeting. Desirably, such sheeting may then be assembled in the form of self-adhesive laminates.

Others have recognized the desirability of producing retroreflective thermoplastic material in sheet form. United States Patents Nos. 2,310,790, 2,380,447, and 2,484,757, granted to *Jungersen*, describe and teach the shortcomings of previously-known reflectors manufactured from glass, and the advantages inherent in providing a reflective material in a less fragile and more flexible sheet form. While so suggesting, it is not known if *Jungersen* in fact ever commercialized any product disclosed in such patents.

In U.S. Patents Nos. 4,244,683 and 4,332,847 issued to *Rowland*, the desirability of manufacturing cube-corner retroreflective sheeting in a continuous, non-stop process is presented, but the approach selected by *Rowland* is a "semi-continuous" process (*Rowland* '683, column 2, lines 18—34; *Rowland* '847, column 2, lines 26—38), presumably so-called because the process requires frequent repositioning of the molding plates.

In United States Patent No. 3,187,068, issued to *DeVries, et al.*, continuous production of reflective sheeting is disclosed, utilizing encapsulated glass microspheres as the reflecting medium. *DeVries, et al.* describes the application of a pressure-activated adhesive layer to such sheeting to enable attachment of sheeting segments to selected surfaces.

In United States Patent No. 3,649,352, issued to *Courneya*, a beaded sheeting construction is described, portions of which become reflective when heated, and which includes a pressure-activated adhesive layer allowing attachment of the sheeting construction to other articles.

*Palmquist, et al.*, 2,407,680 teach the utilization of glass microspheres or beads included as the reflective elements in flexible sheet forms; *Tung, et al.*, in United States Patent No. 4,367,920, also describes a laminated sheet construction using glass microspheres as the reflective elements.

A common problem in the construction of reflective laminate sheeting is to find means to bond the lamina firmly together in a way which preserves the required retroreflective qualitites of the reflective elements selected for use. An example of prior efforts to solve this problem with respect to glass microspheres may be seen in United States Patent No. 3,190,178, issued to *McKenzie*, wherein a cover sheet or film is secured over exposed glass microspheres by use of die elements which force a portion of the material in which the glass microspheres are embedded into contact with the cover sheet. The die elements thus create a grid pattern on the resulting sheeting construction, with each grid forming a separate cell. Within each cell, an air space is maintained between the microspheres and the cover sheet, and incident light traverses the cover sheet and the air space to be retroreflected by the embedded microspheres.

*Holmen, et al.*, U.S. Patent No. 3,924,929, teach a cube-corner type upper rigid sheet having upstanding walls, or septa, integrally formed as part of the cube pattern. The septa extend to form a regular geometric pattern of individual cells, with the septa extending at least as far from the upper sheet as the cube-corner elements. A particulate packing may be used to fill each of the cells, and a backing sheet is then attached to the rear of the upper sheet, with the septa serving as the attachment sites. *Holmen, et al.* use relatively large cube-corner elements fashioned as rigid sections bound to a flexible back, and has limited flexibility in use.

In *McGrath*, U.S. Patent No. 4,025,159, the cellular concept is described with respect to cube-corner type retroreflective sheeting, through use of dies to force a carrier film into contact with the reverse side of the cube-corner sheeting. The carrier film must then be cured with radiation to bind it to the cube-corner sheeting and, as in *McKenzie*, the resulting cells include an airspace extending between the carrier film and the reverse side of the cube-corner sheet. The air cell structure apparently was intended to provide a hermetically sealed cell, avoiding the need for metallizing the cube-corner elements, and providing an air/thermoplastic interface to enhance retroreflection.

None of the foregoing teach the assembly of molded or embossed cube-corner type retroreflection sheeting into self-adhesive laminates which protect and enhance the reflective properties of the sheeting without requiring the use of dies of integrally-molded septa or walls included as part of the cube pattern. Further, none of the foregoing permits the material to benefit from encapsulated sections of cube-corner elements while enhancing and meeting the requirements specified in the aforementioned DOT FP-79 Specification.

The present invention provides a retroreflective laminate sheet construction including a thermoplastic web [26] with a light-receiving and transmitting first side [28] and a second side [30] which is coextensive with the first side and which has a cube-corner type retroreflective pattern formed thereon; a layer of granular material [34] deposited on the second side [30] to cover selected protions of the retroreflective pattern with remaining portions of the second side [30] devoid of the granular material; and a layer of back coating material [32] deposited on the second side [30] to overlay the granular material [34], thereby encapsulating the granular material [34] between the second side and the back coating material, characterised in that:

(a) the laminate sheet construction is flexible,

(b) the granular material [34] is hydrophobic, and

(c) the back coating [32] extends to the second side [30] at the said remaining portions and is fixedly secured thereto.

A preferred production process will now be described.

A thermoplastic sheet or web is provided on its reverse side with a retroreflective cube-corner type pattern. A thin layer of a liquid vehicle or solvent containing hydrophobic granular material (such as silica treated with silanes) is deposited on the reverse side of the web, as by screen printing, in a pattern leaving selected sites devoid of granular material. The web is then dried to drive off the solvent and, thereafter, a water-based back coating is applied over the granular material, with portion of the back coating being in direct contact with the thermoplastic web at those sites on the web devoid of granular material. Thereafter, the back coating is dried or cured, and a layer of adhesive such as pressure-sensitive or heat-activated adhesive is applied thereto. This procedure thus enables the assembly of patterned web material into laminates which include an activated adhesive layer while protecting the retroreflective properties of the precisely formed cube-corner pattern.

In a preferred embodiment of the present invention, a thin layer of a hydrophobic silica mixture is screened or sprayed onto an embossed reverse surface of a thermoplastic web in a diamond-like pattern, and is thereafter dried. A water-based back coating mixture or formulation is next deposited over the silica layer to encapsulate the silica and to contact the thermoplastic sheet where no silica was deposited. The back coating then is heat dried and/or cured to form a continuous film. A pressure-sensitive or heat-activated adhesive then is applied to the cured backcoating layer, with the adhesive protected by a release sheet which is removed when the laminate is applied to an object.

The completed laminate is then cut, trimmed, or otherwise shaped for application to supporting surfaces, such as street or highway signs, and graphics or other indicia may thereafter be painted, printed, silk-screened, or otherwise affixed to the uppermost surface of the laminate, thus producing a readily and easily constructed highly retroreflective finished product.

These and further aspects of the present invention will become more apparent upon consideration of the accompanying drawings, wherein:

Brief description of the drawings

Fig. 1 is an enlarged perspective and somewhat schematic view of one preferred aspect of the retroreflective sheeting of the present invention as a completed construction;

Fig. 2 is a view along line 2—2 of Fig. 1;

Fig. 3 is a greatly enlarged plan view illustrating the formed surface of reflective sheeting comprising one aspect of the present invention;

Fig. 4 is a somewhat schematic and symbolic view of the processes and machinery utilized in a preferred aspect of the present invention;

Fig. 5 is a plan view of one form of screen pattern used to apply the silica layer of the present invention; and

Fig. 6 is an enlarged view, in partial detail, of an individual cell of the sheeting of the present invention.

Detailed description of the drawings

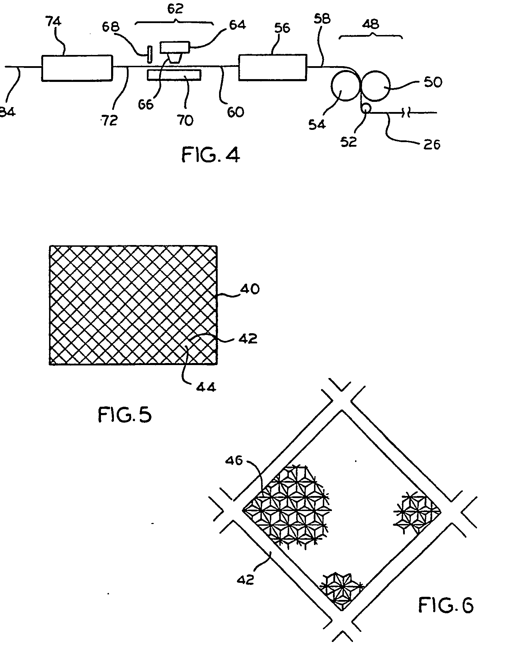

Referring now to Fig. 3, the numeral 10 indicates generally a segment of cube-corner type retroreflective thermoplastic web used in forming the laminate of the present invention. As seen in Fig. 3, the figures therein depict the rear surface of a portion of flexible retroreflective sheeting 12 fashioned from transparent thermoplastic material in web form which has formed thereon, preferably by embossing, a retroreflective and repeating pattern of cube-corner reflector elements characterized by cube faces 14, 16 and 18. In a preferred aspect of such sheeting, sheet 12 is formed from an impact-modified acrylic material having UV inhibitors or absorbers added thereto, and which, prior to embossing, had parallel front and back surfaces and was initially on the order of about 0.15 mm (0.006 inches) thick.

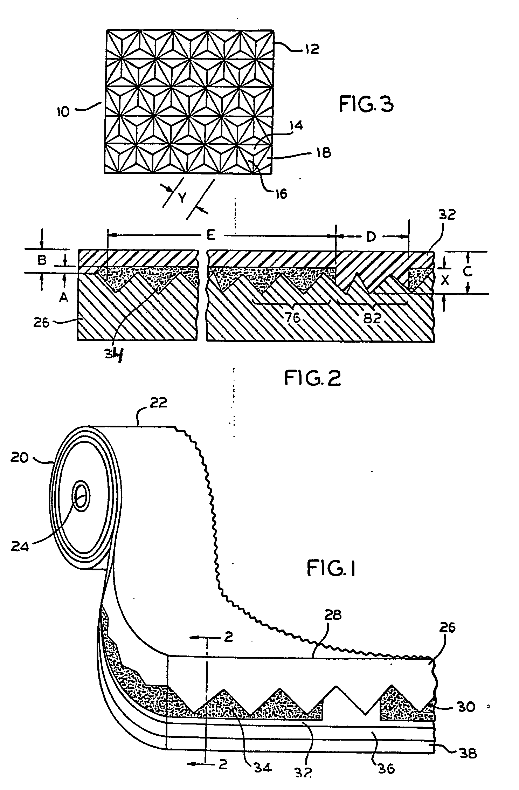

The cube-corner pattern formed on sheeting 12 is formed in an optically precise, finely-detailed pattern. For example, as seen in Fig. 2, the depth to which the cube-corner pattern is embossed onto sheet 12 may be of the order of 0.0859 mm (0.00338 inch) (dimension X). As shown at dimension Y in Fig. 3, the cubes formed on sheet 12 may be spaced apart by a distance on the order of about 0.18 mm (0.0072 inch), for the depth as shown at X as set forth above. While the cube pattern shown in Fig. 1 illustrates cubes formed with their optical axes normal to the face of sheet 12, it is to be understood that other versions and patterns may also be utilized as forming the retroreflective web of the laminate of the present invention.

Referring now to Fig. 1, the numeral 20 indicates generally a roll of retroreflective laminate 22 manufactured in accordance with preferred aspects of the present invention to be described hereinbelow. As herein shown, laminate 22 is rolled onto a core 24. A thermoplastic web 26 having a front or obverse surface 28 and a rear or reverse surface 30 upon which is embossed the cube-corner type retroreflective pattern is illustrated in Fig. 3. The thermoplastic web 26 may be on the order of about 0.15 mm in thickness (0.006 inch).

Bonded to the reverse surface 30 of the thermoplastic web 26 is back coating or film 32. In a preferred aspect of the present invention, a hydrophobic granular silica material 34 is interposed between the back coat film 32 and the reverse side 30 in a manner to be described hereinbelow.

In accordance with a preferred embodiment of the present invention, a layer of adhesive 36 is bonded to a release sheet 38 in a presently well-known fashion, and is thereafter bonded to cured back coat film 32 in order to provide a finished laminate 22 which includes a pressure-sensitive or heat-activated adhesive layer 36 applied to sheeting 12 in a manner which preserves the retroreflective qualities and properties of the cube-corner pattern embossed thereon. The release sheet 38 is used to protect adhesive layer 36 until it is desired to apply laminate 22 to a given surface.

Fig. 4 shows, in schematic form, a preferred arrangement of equipment and sequence of operations to produce a retroreflective sheeting laminate of the type shown in Fig. 3.

The application of adhesive directly to the reverse side of a cube-corner embossed thermoplastic web will cause an undesirable and unacceptable loss of retroreflective capability. This arises from the contact of the adhesive material with the obverse side of embossed thermoplastic web 26, i.e., the filling of the "valleys" formed by the embossed pattern and the subsequent interface formed between substances too close in refractive indices to produce adequate retroreflection, so the transparent film can no longer utilize the phenomenon of total internal reflection to efficiently effect retroreflection of light. To solve this problem, a substantial portion of the cube-corner pattern either must be hermetically sealed with an air

4

space between the back wall and the cube-corner elements, or the cube-corner elements must be backed in a way which would preserve the retroreflective properties of the formed web while providing sites for firm attachment of an adhesive layer (or other adhesive material). Without such protection, and without such attaching sites, the use of, and effectiveness of a retroreflective embossed web is seriously compromised and curtailed.

Unexpectedly, use of hydrophobic granular materials has been found to afford such protection. Among such materials are xylenated glass particles, powdered silicone rubber, and silane-treated silica.

As part of the present invention, it has been found that a hydrophobic silica mixture consisting principally of amorphous silica treated with silanes, when used to fill the valleys formed by the embossed pattern, preserves the retroreflective properties of the formed pattern for most practical purposes. Again, it is not known precisely why this effect obtains: it has been theorized that the point contact of granules with the reverse face of the embossed thermoplastic web acts to preserve the retroreflective properties of the pattern, perhaps by preserving a sufficient air interface with the reverse side of the cube-corner pattern. However, the present invention obtains excellent results even where the silica particles used are significantly smaller than, for example, the particles discussed in prior art patents such as *Holmen, et al.*, U.S. Patent No. 3,924,929.

Use of such silica offers advantages such as low price, availability, and ease and precision of formulation. It further provides unique color and reflective characteristics to the film which improves the appearance of the film even relative to the glass bead types heretofore commonly used.

As discussed hereinabove with respect to the *Holmen, et al.* reference, others have attempted to solve the problem of loss of reflectivity by providing upstanding walls or septa as part of the rigid molded front face pattern, with the septa forming individual pockets for the application of granular compounds having particle sizes far in excess of the silica particles used in the present invention. The disadvantages to such an approach, particularly with respect to the cube-corner type embossed pattern utilized in the present invention are manifest. Use of rigid septa limits the size and shape of the cell. A separate mold must be formed for each type of retroreflective sheeting requiring a cell size other than that formed in the original mold. What is meant by the term "cell size" is the area bounded by or closed off by the walls to form a single pocket for the granular backing material.

Formation of such septa in a relatively rigid mold pattern manufactured to as fine and precise a degree of detail as that shown in the present invention also may cause problems with respect to stripping the formed thermoplastic web from the forming tool. This may particularly be a problem where the septa or walls extend inwardly into the mold to a distance greater than the depth of the cube-corner pattern.

A preferred embodiment of the present invention includes the mixing of a hydrophobic silica mixture using hydrophobic silica, organic solvents, and thickeners, and the application of this mixture, while in a liquid form, to the reverse side of the formed thermoplastic web in a desired pattern. One advantage of the present process and product is that the pattern can conveniently be changed to effect changes in reflective capability of the film, without changing the tools used in forming the embossed web. Thereafter, the partially coated or imprinted thermoplastic web is passed through a drying oven which drives off the solvents used to form the mixture, thereby drying the pattern on the thermoplastic sheet. The pattern in which the silica is applied to the thermoplastic web leaves selected portions or sites on the thermoplastic web devoid of silica.

Referring now to Fig. 5, the numeral 40 indicates generally such a selected pattern. Each runner or path 42 represents an area on the reverse surface of thermoplastic web 26 where no silica has been deposited. Each square or diamond-shaped area 44 represents an area on the surface of thermoplastic web 26 onto which the silica mixture has been deposited.

As seen in Fig. 6, the actual percentage of area covered by the silica mixture is determined by the thickness or width of each runner or path 42, and the pattern selected for deposition of the silica, with the cell 44 having an area bounded by the runners, and fully available for the reception and retroreflection of incident light by the embossed retroreflective patterns shown partially at 46.

Referring now to Fig. 4, it may be seen that thermoplastic web 26 may be drawn directly from an associated forming machine (not herein specifically shown) in a continuous process, or may be drawn from a separate supply reel onto which the embossed web 26 has been wound (not herein specifically shown). If desired, web 26 may be supported by a backing sheet, not herein specifically shown, coextensive with observe face 28, leaving reverse surface 30 exposed.

It should be noted that reference to web 26 also includes reference to a laminate formed by web 26 and a backing sheet such as described hereinabove.

Web 26 is drawn by, for example, powered rollers (not herein specifically shown), to silica mixture application station 48. As herein diagrammatically shown, a preferred means and method of applying the silica mixture to web 26 may be accomplished through use of a screen-printing roller 50 which has mounted about the outer periphery thereof, a metal screen formed to provide the shape or pattern to which it is desired to apply the silica mixture. The mixture is forced under pressure from the interior of screen-printing drum onto the reverse side 30 of the thermoplastic web 26. As herein shown, the web 26 is directed by idler roller 52 to pass between the screen-printing drum 50 and a backing drum 54.

A preferred form of the apparatus utilized to apply the silica mixture at application station 48 consists of a drum printer manufactured by Stork Brabant BV of Boxmeern, Holland, of the type having a drum with

5

electro-formed mesh screens over which a photo-resist pattern (such as a silk screen) may be mounted, with a screen pattern providing a diamond cell size in the range of from about 2.44 mm (0.096 inch) to 7.62 mm (0.300 inch), and a runner or cell wall thickness of from about 2.54 mm (0.010 inch) to about 1.27 mm (0.050 inch). Variations in the shape of the cells, pattern repeat of the cells, and thickness of the runners may be accomplished by changing the printing screen used on screen-printing drum 50. Also, the constant width of the web may be of various sizes, and the printing screens used will be of a compatible width.

In its preferred form, the silica mixture is made from a hydrophobic silica such as that manufactured by the Pigments Division of Degussa, of Frankfurt, West Germany, under the trade designation Sipernat D10. A preferred composition of the mixture includes hydrophobic silica in a mixture containing approximately 98 percent silane-treated silicon dioxide ($SiO_2$); 0.8 percent sodium oxide ($Na_2O$), and 0.8 percent of sulfur trioxide ($SO_3$); a non-polar aliphatic hydrocarbon solvent carrier; a polar solvent; and, where desired or required, a thickening agent. One aliphatic non-polar hydrocarbon solvent successfully used is mineral spirits, and a workable mixture has been created through use of an organic alcohol, preferably butanol, as the non-polar solvent material. A clay-based thixotropic thickener also may be used in varying amounts to produce a well-defined screen-printed pattern of the silica slurry on the embossed thermoplastic web.

The particular combination of solvents and thickeners is important to satisfactory deposition and retention of the silica in a precise and accurate pattern. Screen printing of particulate material commonly requires use of resins or other binders to hold the deposited particles in place. A resin or binder cannot however be used in this instance because of the adverse reactive effect on the thermoplastic web and reflectivity.

Another important consideration is the rheology, or flow characteristics of the silica slurry as it is forced through the printing screen. The slurry must "relax", or thin as it is forced through the screen apertures, and thereafter regain sufficient viscosity to retain a well-defined pattern with good levelling qualities and appearance characteristics. Yet, another consideration is use of a solvent vehicle which obtains the aforementioned qualities without attacking or degrading the thermoplastic web upon which the retroreflective pattern is formed.

Use of polar solvents, such as butanol, enables the slurry to maintain an increased concentration of solids (silica). Such solvents, however, react with the thermoplastic material used to form the web. Non-polar solvents, such as mineral spirits, preserve the embossed web, yet do not act to provide a satisfactory silica pattern. Therefore a blend of polar and non-polar solvents has been found to be useful in carrying enough solids without degrading reflectivity and degrading the web.

Preferably, the hydrophobic silica is present in proportions ranging from about 15 percent to about 35 percent by weight, the non-polar solvent carrier is present in amounts ranging from about 40 percent to about 70 percent, the polar solvent is present in amounts ranging from about 10 percent to about 30 percent, and the thickening agent may be present in amounts from about 2 percent to about 8 percent. One preferred formulation of the silica mixture includes 20 percent by weight Sipernat D10 hydrophobic silica, 56 percent mineral spirits, 20 percent butanol, and 4 percent thickener. It has been found that such proportions preserve the web while providing a useful silica pattern.

After application of the silica mixture, web 26 is passed through a heating oven 56 where the resulting silica pattern is heated to drive off the organic solvents without heating web 26 to the point where heat distortion of the cube-corner elements of the laminate will occur.

After drying, the silica is mechanically held to the cube-corner elements on the reverse face 30 of web 26 by, it is believed, electrostatic forces and physical inter-engagement of the silica particles themselves.

Thus, as web 26 exits mixture application station 48, it has taken on the form of a first modified laminate 58, *i.e.,* a web 26 having a cube-corner elements with a precisely formed pattern of silica mixture screened thereon over a portion of the elements, with an uncovered portion of the cube-corner elements still exposed. As modified laminate 58 exits drying oven 56, it takes on a second modified laminate construction 60 wherein the solvents present in the silica mixture have been driven off and the silica itself has remained cured or dried into its screened-on pattern.

The second modified laminate 60 then enters a back coating application station 62. The application of a water-based back coating accomplishes several results. First, those areas onto which no silica has been screened or deposited will allow direct contact between the back coating and the reverse side 30 of the embossed or otherwise formed thermoplastic web, thus "wetting" web 26 with the liquid backcoating mixture. Second, a layer of back coating material will overlay the silica pattern formed on thermoplastic web 26 and, when applied effectively, will not disturb or disrupt the printed or screened-on silica pattern. Third, the back coating may then be dried or cured to provide a firm attachment to thermoplastic web 26 to provide a flat, smooth and integral surface upon which further layers, such as a layer of pressure-sensitive or heat-activated adhesive may be effectively and conveniently applied, and to protectively cover or encapsule the silica pattern. A surprising and unexpected result is that the silica prevents permeation by the liquid back coating to the tube-corner pattern. As described above, such permeation would adversely affect the reflectivity of the final assembled laminate.

Application of the back coating mixture to the second modified laminate 60 may be accomplished in a number of ways, such as by spraying, roller application, squeegeeing, or the like. The manner in which the back coat is applied will be determined, by *inter alia*, the precise formulation of the back coat and the pressure, or force, which can be withstood by the silica pattern after it has been dried.

For purposes of illustration, a back coating application station 62 may be characterized as having a supply header or tank 64 communicating with an application means 66 which may be a nozzle or series of nozzles, or the like. An implement such as a doctor blade 68 may be used to more uniformly spread the back coating after it has been applied without damaging the silica pattern. A platen 70 provides support for the second modified laminate 60 during application of the back coat.

After application, the third modified laminate 72 enters drying oven 74 wherein the back coat material is heat-cured, resulting in back coating layer 32 as shown in Fig. 1.

Successful use of a back coating requires that the back coating formulation meet several particularly important working parameters. One is that the back coating have flow characteristics such that the relatively narrow and shallow runners formed by the silica pattern will be filled, while not disturbing the dried silica pattern itself. This means that the viscosity of the back coating must be carefully controlled to assure that the back coating can be applied without disturbing the silicone pattern. Another characteristic is that the back coating cannot penetrate or interact with the applied silica to reach the interface between the silica and the cube-corner pattern. Yet another requirement is that the back coating, when dried, have the required flexibility and toughness to withstand use in a laminate. Ideally, the back coating should also be of a color which enhances daytime visibility of articles made with such laminates.

Several preferred back coatings have been utilized. Each may be characterized generally as including a water-borne or water-based polymeric mixture or system, a whitening agent, a defoamer, a thickener for use in adjusting the final viscosity, and a pH-adjusting component.

A first preferred formation of a back coating is presented herewith as Example 1:

### Example 1

1. DP-101, a water-borne polymeric system consisting of about 34% acrylic/urethane copolymer and 66% water — 69.7% to 79.7%

2. UCD-1060Q, a pre-dispersed whitening agent (titanium dioxide) containing about 72% solids — 21.5% to 23.5%

3. Balab 3017A, a defoamer — 0.4% to 0.6%

4. CP-15 (50 percent in water) acrylic/based thickener to adjust viscosity — 1.5% to 2.5%

5. Ammonia (28 percent aqueous solution) to adjust pH to 9.0 to 10.0 — None to 0.3%

The foregoing mixture is formed by adding the defoamer to the water-borne acrylic/urethane copolymer system with gentle stirring. Thereafter, the whitening agent and the ammonia, if necessary, are added as gentle stirring is continued. The thickener is thereafter added with increasing blade speed and the entire mixture is stirred for about 30 minutes at moderate speed. A preferred mixture for such an operation is manufactured by Meyers Engineering of Bell, California under the trade or model designation "550".

DP-101 is a trade designation of Polyvinyl Chemical Industries, Inc. of Wilmington, Massachusetts. While the precise formulation is not known, Polyvinyl Chemical Industries has assigned the trade designation DP-101 *only* to the particular urethane/acrylic copolymer resin utilized in the foregoing back coat formulation. UCD-1060Q is a trade designation of the Universal Color Dispersion Company of Lansing, Illinois used to identify a dispersion product for water-based systems. Balab 3017-A is also identified by the trade designation "bubble breaker" and is a product of the Organics Division of Witco Chemical Corporation of New York, N.Y. CP-15 is a trade designation of the Rohm and Haas Company and is an acrylic-based thickening agent.

A second formulation for the back coating material is herewith presented as Example 2:

Example 2

| | | |
|---|---|---|
| 1. | Emulsion E-1829, a water-borne polymeric acrylic emulsion | 42.1% to 62.1% |
| 2. | Water | 2.2% to 12.2% |
| 3. | Ethylene glycol, an anti-skinning flow improvement agent | 1.5% 1o 2.5% |
| 4. | UCD 1060Q, a pre-dispersed whitening agent (titanium dioxide) | 26.2% to 36.2% |
| 5. | Syloid 169, silicone dioxide flatting agent to prevent blocking | 3.2% to 5.2% |
| 6. | Dimethylamino ethanol pH-adjusting solvent | 0.3% to 0.5% |
| 7. | Balab 3017A defoamer | 0.6% to 1.0% |
| 8. | Texanol solvent, a coalescent solvent for improved film formation | 1.4% to 1.6% |
| 9. | CP-15 (50 percent in water) acrylic-based thickener to adjust viscosity | None to 1.6% |

The foregoing back coating is prepared by adding the defoamer to the water-borne system with gentle mixing, then adding the water, the anti-skinning agent, the pre-dispersed whitening agent and the amine while continuing gentle mixing. Thereafter, the coalescent solvent is added. Blade speed is then increased and the thickener is added to adjust the viscosity to the desired level and the resulting mixture is then stirred at moderate speed for 30 minutes.

Emulsion E-1829 is a trade designation of the Rohm and Haas Company of Philadelphia, Pennsylvania, for an acrylic emulsion vehicle. Syloid is a trade designation of the Davidson Chemical Company, a division of W. R. Grace, of Baltimore, Maryland for a silicon dioxide flatting agent. Texanol is a trade designation of the Eastman Chemical Products Company of Kingsport, Tennessee used to identify a coalescing agent.

Referring now to Fig. 2, a partial sectional view of a schematic portion of embossed thermoplastic web 26 after application of both silica 34 and back coating 32 is shown. As therein seen, reverse side 30 of thermoplastic web includes a series of valleys, indicated generally at 76. The valleys 76 schematically represent the cube-corner elements found in web 26 when the cube-corner pattern shown in Fig. 1 is embossed onto thermoplastic web 26. When the silica layer 34 is applied, the valleys between adjacent cube-corner elements 76 are filled (except where the screen pattern leaves Web 26 exposed) and, in a preferred embodiment of the invention, enough silica 34 is applied to extend a distance of about 2.5 μm (0.0001 inch) to about 0.076 mm (0.003 inch) above the embossed surface of thermoplastic web 26, as characterized by dimension A of Fig. 2. In like fashion, the back coat layer 32 is applied to a thickness B of about 0.05 mm (0.002 inch) to about 0.1 mm (0.004 inch) above the silica layer 34. Where runners or paths 42 are formed, each such runner consists of the back coat material which extends downward to wet the floor of each valley 76 to a total depth C, as shown in Fig. 2 which, preferably, is about 0.15 mm (0.006 inch). In a preferred embodiment of the present invention, each such runner is 0.025 mm (0.001 inch) deep and, as characterized by dimension in Figs. 2 and 6, may be on the order of 0.38 mm (0.015 inch) wide.

In the embodiment herein illustrated, each discrete element of the applied silica pattern is square in shape with the length of each side of the square characterized by dimension in Fig. 2. As hereinabove described, the percentage of surface area available for retroreflection may be adjusted by adjusting the dimensions D and E as shown in Figs. 2 and 6. Where, for example, dimension D is 0.38 mm (0.015 inch) and dimension E is 5 mm (0.200 inch), the effective surface available for retroreflection is 84 percent. Where dimension D is 0.69 mm (0.027 inch) and dimension E is 3.5 mm (0.138 inch), approximately 70 percent of the surface of the resulting sheet preserves retroreflective characteristics. With a dimension D of 0.74 mm (0.029 inch) and a dimension E of 2.4 mm (0.096 inch), approximately 55 percent of the total surface of the resulting sheet retains retroreflective properties.

Thus, the degree to which the resulting laminar sheet returns incident light towards its source may be adjusted independent of the actual cube-corner type pattern formed on thermoplastic web 26, in a manner which is much more convenient and efficacious than changing the mold dimensions or characteristics used to produce the embossed cube-corner pattern.

Referring again to Fig. 4, after fourth modified laminate 84 exits drying oven 74, a pressure-sensitive or heat-activated adhesive layer 36 may then be applied by taking the resulting laminate 84 and drawing it past a station where a backing or release sheet 38, pre-coated with adhesive 36, may be layered directly onto back coating 38, resulting in a completed laminate 22 as shown in Fig. 1. Finally, if one is used, the carrier sheet is stripped away, exposing obverse face 28 as the light-receiving surface of the finished laminate 22.

It should be noted that the foregoing examples and preferred embodiments have been presented with respect to a cube-corner embossed pattern having a depth characterized by dimension X in Fig. 2 of 0.1 mm (0.004 inch). It is contemplated that patterns of varying depth and varying dimensions may be utilized, and that the dimensions herein discussed for the depth of silica applied, and the width and depth of the runners thereby formed, may be varied without departing from the spirit and scope of the invention as herein discussed.

The finished sheet will have the physical characteristics enabling it to meet specification FP-79 for reflective sheeting, and its reflective properties can easily be varied by utilizing a different screen pattern. Moreover, the whiteness achieved by the existing laminate back coating substantially enhances the daylight esthetics of the finished material. The heating of the laminate during the drying and curing of the silica, back coating or adhesive, also may have an effect on the final reflective performance of the laminate, dependent upon the characteristics of the initial tool and the material chosen for the film.

It may also be noted that while the silica pattern herein presented is a series of squares turned to present a diamond-like pattern, other cell sizes and shapes are also possible, wherever they appear efficacious for purposes of performance or appearance.

While the foregoing has presented various specific preferred embodiments, it is to be understood that these embodiments have been presented by way of example only.

## Claims

1. A retroreflective laminate sheet construction including a thermoplastic web [26] with a light-receiving and transmitting first side [28] and a second side [30] which is coextensive with the first side and which has a cube-corner type retroreflective pattern formed thereon; a layer of granular material [34] deposited on the second side [30] to cover selected portions of the retroreflective pattern with remaining portions of the second side [30] devoid of the granular material; and a layer of back coating material [32] deposited on the second side [30] to overlay the granular material [34], thereby encapsulating the granular material [34] between the second side and the back coating material, characterised in that:
   a] the laminate sheet construction is flexible,
   b] the granular material [34] is hydrophobic, and
   c] the back coating [32] extends to the second side [30] at the said remaining portions and is fixedly secured thereto.

2. The construction of claim 1, wherein the granular material [34] is deposited in a regular and repeating pattern.

3. The construction of claim 1, wherein the granular material [34] is deposited so as to form a discrete, regularly-spaced array of pattern elements [44], each pattern element being surrounded by contiguous paths [42] constituted by the said remaining portions of the second side [30] devoid of the granular material.

4. The construction of claim 3, wherein the array of pattern elements repeats itself at regular intervals.

5. The construction of any of the preceding claims, wherein the granular material [34] is hydrophobic silica.

6. The construction of any of the preceding claims, wherein the granular material [34] has a particle size of about 18 nanometres.

7. The construction of any of the preceding claims, wherein the layer of granular material [34] consists initially of a slurry consisting of a hydrophobic granular material, a polar solvent, and a non-polar solvent, the polar solvent and the non-polar solvent being present in relative proportions sufficient to allow deposition of the hydrophobic granular material in a well-defined pattern on the thermoplastic web.

8. The construction of claim 7, wherein the polar solvent is an aliphatic alcohol.

9. The construction of claim 7, wherein the polar solvent is butanol.

10. The construction of claims 7 to 9, wherein the non-polar solvent is mineral spirits.

11. The construction of claims 7 to 10, wherein the polar solvent is present in an amount from about 10% to about 30% of the slurry, and the non-polar solvent is present in an amount from about 40% to about 70% of the slurry.

12. The construction of any of claims 7 to 11, wherein the polar solvent is present in an amount of about 15% of the slurry.

13. The construction of any of claims 7 to 10, wherein the slurry consists of from about 15% to about 35% of the hydrophobic granular material, from about 15% to about 30% of said polar solvent, and from about 40% to about 70% of said non-polar solvent.

EP 0 142 250 B1

14. The construction of any of claims 7 to 12, wherein the slurry includes a thixotropic thickener.

15. The construction of any of the preceding claims, wherein the back coating material [32] substantially consists of a polymeric, water-based system.

16. The construction of claim 15, wherein the back coating material includes a major proportion of an acrylic/urethane copolymer.

17. The construction of claim 15, wherein the back coating material [32] includes a major proportion of polymeric acrylic water-borne system.

18. The construction of claim 15, wherein the back coating material [32] consists initially of the following constituents;

a] a water-borne emulsion of an acrylic/urethane copolymer in a proportion from about 69% to about 80%;

b] a whitening agent in a proporiton from about 21% to about 24%;

c] a defoamer in a proportion from about 0.4% to about 0.6%;

d] an acrylic-based thickening agent in a proportion from about 1.5% to 2.5%; and

e] a pH-adjusting agent in a proportion up to about 0.3%.

19. The construction of claim 15, wherein the back coating material [32] initially consists of the following constituents:

a] a water-borne polymeric acrylic system in a proportion from about 42% to about 62%;

b] water in a proportion from about 2% to about 12%;

c] an anti-skinning agent in a proportion from about 1.5% to about 2.5%;

d] a whitening agent in a proportion from about 5% to about 36%;

e] a flatting agent in a proportion from about 3% to about 5%;

f] a pH-adjusting agent in a proportion from about 0.3% to about 0.5%;

g] a defoamer in a proportion from about 0.6% to about 1.0%;

h] a coalescent solvent in a proportion from about 1.0% to 1.6%; and

i] a thickener in a proportion up to 3.6%.

20. The construction of any of the preceding claims, wherein the cube-corner type pattern comprises an array of cube-corner elements which repeats itself in regular intervals.

21. The construction of any of the preceding claims, further comprising:

a layer of adhesive [36] applied to and coextensive with the back coating material [32]; and

a release sheet [38] releasably secured to the adhesive layer.

22. The construction of claim 3, wherein the pattern elements [44] are square.

23. The construction of claim 3, wherein the paths [42] are rectangular.

24. The construction of claim 3, wherein each pattern element [44] is a square having sides of 5 mm and each path [42] is 0.38 mm wide.

25. The construction of claim 3, wherein each pattern element [44] is a square having sides of 3.5 mm and each path [42] is 0.69 mm wide.

26. The construction of claim 3, wherein each pattern element [44] is a square having sides of 2.4 mm and each path [42] is 0.74 mm wide.

27. A method of producing the retroreflective laminate sheet construction of claim 1, comprising the steps of:

a] depositing on the second side [30] of the thermoplastic web [26] a layer of hydrophobic granular material [34] covering selected portions of the retroreflective pattern while leaving remaining portions of the second side [30] devoid of the granular material;

b] applying a layer of back coating material [32] to overlay the granular material [34] and to contact the said remaining portions; and

c] curing the back coating material [32] to encapsulate the granular material [34] between the second side [30] and the cured back coating material.

28. The method of claim 27, including adjusting the amount of incident light reflected from the first side [28] of the web [26] without changing the retroreflective pattern, by appropriately sizing and shaping the said remaining portions to cover a selected proportion of the surface area of the second side [30].

**Patentansprüche**

1. Rückstrahlende Schichtstoffblattkonstruktion, enthaltend eine thermoplastische Bahn (26) mit einer Licht empfangenden und durchlassenden ersten Seite (28) und einer zweiten Seite (30), die sich mit der ersten Seite zusammen ausdehnt und auf der ein rückstrahlendes Muster vom Würfeleckentyp gebildet ist; eine Lage von körnigem Material (34), da auf der zweite Seite (30) zum Überdecken ausgewählter Abschnitte des rückstrahlenden Musters abgelegt ist, wobei Abschnitte der zweiten Seite (30) frei von körnigem Material bleiben; und eine Lage von rückseitigem Beschichtungsmaterial (32), das auf der zweiten Seite (30) zum Bedecken des körnigen Materials (34) abgelegt ist, wodurch das körnige Material (34) zwischen der zweiten Seite und dem rückseitigen Beschichtungsmaterial eingekapselt ist, dadurch gekennzeichnet, daß:

(a) die Schichtstoffblattkonstruktion flexibel ist,

(b) das körnige Material (34) hydrophob ist und

10

(c) sich die rückseitige Beschichtung (32) zur zweiten Seite (30) an den verbleibenden Abschnitten erstreckt und an diesen fest befestigt ist.

2. Konstruktion nach Anspruch 1, bei der das körnige Material (34) in einem regelmäßigen und sich wiederholenden Muster abgelegt ist.

3. Konstruction nach Anspruch 1, bei der das körnige Material (34) so abgelegt ist, daß es eine diskrete, mit regelmäßigem Abstand versehene Anordnung von Musterelementen (44) bildet, wobei jedes Musterelement von aneinandergrenzenden Pfaden (42) umgeben ist, die durch die verbleibenden Abschnitte der zweiten Seite (30), frei von dem körnigen Material, gebildet sind.

4. Konstruktion nach Anspruch 3, bei der sich die Anordnung von Musterelementen mit regelmäßigen Intervallen wiederholt.

5. Konstruktion nach einem beliebigen der vorhergehenden Ansprüche, bei der das körnige Material (34) hydrophobes Siliciumoxid ist.

6. Konstruktion nach einem beliebigen der vorhergehenden Ansprüche, bei der das körnige Material (34) eine Teilchengröße von etwa 18 Nanometern aufweist.

7. Konstruktion nach einem beliebigen der vorhergehenden Ansprüche, bei der die Lage von körnigem Material (34) anfänglich aus einer Schlammasse besteht, die aus einem hydrophoben körnigen Material, einem polaren Lösungsmittel und einem nichtpolaren Lösungsmittel besteht, wobei das polare Lösungsmittel und das nichtpolare Lösungsmittel in relativen Anteilen vorhanden sind, ausreichend, um das Ablegen des hydrophoben körnigen Materials in einem wohldefinierten Muster auf der thermoplastischen Bahn zu gestatten.

8. Konstruktion nach Anspruch 7, bei der das polare Lösungsmittel ein aliphatischer Alkohol ist.

9. Konstruktion nach Anspruch 7, bei der das polare Lösungsmittel Butanal ist.

10. Konstruktion nach den Ansprüchen 7 bis 9, bei der das nichtpolare Lösungsmittel Lackbenzin ist.

11. Konstruktion nach den Ansprüchen 7 bis 10, bei der das polare Lösungsmittel in einer Menge von etwa 10% bis etwa 30% der Schlammasse vorhanden ist und das nicht polare Lösungsmittel in einer Menge von etwa 40% bis etwa 70% der Schlammasse vorhanden ist.

12. Konstruktion nach einem beliebigen der Ansprüche 7 bis 11, bei der das polare Lösungsmittel in einer Menge von etwa 15% der Schlammasse vorhanden ist.

13. Konstruktion nach einem beliebigen der Ansprüche 7 bis 10, bei der die Schlammasse von etwa 15% bis etwa 35% des hydrophoben körnigen Materials, von etwa 15% bis etwa 30% des polaren Lösungsmittels und von etwa 40% bis etwa 70% des nichtpolaren Lösungsmittels besteht.

14. Konstruktion nach einem beliebigen der Ansprüche 7 bis 12, bei der die Schlammasse ein thixotropes Verdickungsmittel enthält.

15. Konstruktion nach einem beliebigen der vorhergehenden Ansprüche, bei der das rückseitige Beschichtungsmaterial (32) im wesentlichen aus einem polymeren System auf Wasserbasis besteht.

16. Konstruktion nach Anspruch 15, bei der das rückseitige Beschichtungsmaterial einen größeren Anteil eines Acryl/Urethan - Copolymerisats enthält.

17. Konstruktion nach Anspruch 15, bei der das rückseitige Beschichtungsmittel (32) einen größeren Anteil eines wasserverdünnbaren polymeren Acrylsystems enthält.

18. Konstruktion nach Anspruch 15, bei der das rückseitige Beschichtungsmaterial (32) anfänglich aus den folgenden Bestandteilen besteht:

a) einer wasserverdünnbaren Emulsion eines Acryl/Urethan - Copolymerisats in einem Anteil von etwa 69% bis etwa 80%;

b) einem weißmachenden Mittel in einem Anteil von etwa 21% bis etwa 24%;

c) einem Antischaummittel in einem Anteil von etwa 0,4% bis etwa 0,6%;

d) einem Verdickungsmittel auf Acrylbasis in einem Anteil von etwa 1,5% bis 2,5%;

e) einem pH-Einstellmittel in einem Anteil bis zu etwa 0,3%.

19. Konstruktion nach Anspruch 15, bei der das rückseitige Beschichungsmittel (32) anfänglich aus den folgenden Bestandteilen besteht:

a) einem wasserverdünnbaren polymeren Acrylsystem in einem Anteil von etwa 42% bis etwa 62%;

b) Wasser in einem Anteil von etwa 2% bis etwa 12%;

c) einem Abdeckgegenmittel in einem Anteil von etwa 1,5% bis etwa 2,5%;

d) einem Weißmachmittel in einem Anteil von etwa 5% bis etwa 36%;

e) einem Spachtelmittel in einem Anteil von etwa 3% bis etwa 5%;

f) einem pH-Einstellmittel in einem Anteil von etwa 0,3% bis etwa 0,5%;

g) einem Antischaummittel in einem Anteil von etwa 0,6% bis etwa 1,0%;

h) einem Zusammenwachslösungsmittel in einem Anteil von etwa 1,0% bis 1,6%; und

i) einem Verdickungsmittel in einem Anteil bis zu 3,6%.

20. Konstruktion nach einem beliebigen der vorhergehenden Ansprüche, bei der das Muster von Würfeleckentyp eine Anordnung von Würfeleckenelementen umfaßt, die sich selbst in regelmäßigen Intervallen wiederholt.

21. Konstruktion nach einem beliebigen vorhergehenden Anspruch, weiter umfassend:

—eine Klebstofflage (36), die auf das rückseitige Beschichtungsmaterial (32) aufgebracht und gleich mit diesem ausgedehnt ist; und

—ein Abziehblatt (38), das abziehbar an der Klebstofflage befestigt ist.

22. Konstruktion nach Anspruch 3, bei der die Musterelemente (44) quadratisch sind.

23. Konstruktion nach Anspruch 3, bei der die Pfade (42) rechteckförmig sind.

24. Konstruktion nach Anspruch 3, bei der jedes Musterelement (44) ein Quadrat ist, das Seiten mit 5 mm aufweist und jeder Pfad (42) 0,38 mm breit ist.

25. Konstruktion nach Anspruch 3, bei der jedes Musterelement (44) ein Quadrat ist, das Seiten mit 3,5 mm aufweist und jeder Pfad (42) 0,69 mm breit ist.

26. Konstruktion nach Anspruch 3, bei der jedes Musterelement (44) ein Quadrat ist, das Seiten mit 2,4 mm aufweist und jeder Pfad (42) 0,74 mm breit ist.

27. Verfahren zur Herstellung einer rückstrahlenden Schichtstoffblattkonstruktion nach Anspruch 1, umfassend die Schritte, daß:

a) auf der zweiten Seite (30) der thermoplastischen Bahn (26) eine Lage von hydrophobem körnigem Material (34) abgelegt wird, die ausgewählte Abschnitte des rückstrahlenden Musters überdeckt, während verbleibende Abschnitte der zweiten Seite (30) frei von dem körnigen Material gelassen werden;

b) eine Lage von rückseitigem Beschichtungsmaterial (32) aufgebracht wird, um das körnige Material (34) zu überdecken und mit den verbleibenden Abschnitten in Kontakt zu treten; und

c) das rückseitige Beschichtungsmaterial (32) ausgehärtet wird, um das körnige Material (34) zwischen der zweiten Seite (30) und dem ausgehärteten rückseitige Beschichtungsmaterial einzukapseln.

28. Verfahren nach Anspruch 27, einschließend, daß die Menge an von der ersten Seite (28) der Bahn (26) reflektiertem einfallenden Licht eingestellt wird, ohne das rückstrahlende Muster zu ändern, indem die verbleibenden Abschnitte geeignet bemessen und geformt werden, so daß die einen ausgewählten Anteil der Oberflächenzone der zweiten Seite (30) überdecken.

**Revendications**

1. Structure de feuille stratifiée rétroréfléchissante comprenant une bande thermoplastique (26) comportant une première face (28) recevant et transmettant la lumière et une seconde face (30) qui est de même étendue que la première face et sur laquelle est formé un dessin rétroréfléchissant du type en coin de cube, une couche de matière granulaire (34) déposée sur la seconde face (30) pour recouvrir des parties choisies du dessin rétroréfléchissant, les parties restantes de la seconde face (30) étant dépourvues de cette matière granulaire, et une couche de matière dorsale (32) déposée sur la seconde face (30) pour recouvrir la matière granulaire (34), en encapsulant de la sorte cette matière granulaire (34) entre la seconde face et la couche dorsale, cette structure étant caractérisée en ce que:

(a) la structure de feuille stratifiée est flexible,

(b) la matière granulaire (34) est hydrophobe, et

(c) la couche dorsale (32) s'étend jusqu'à la seconde face (30) dans les parties restantes susdites et elle y est fixée.

2. Structure suivant la revendication 1, caractérisée en ce que la matière granulaire (34) est déposée suivant un dessin régulier et répétitif.

3. Structure suivant la revendication 1, caractérisée en ce que la matière granulaire (34) est déposée de manière à former un réseau à espacement régulier, distinct, d'éléments de dessin (44), chaque élément de dessin étant entouré par les parcours contigus (42) constitués par les parties restantes susdites de la seconde face (30) dépourvues de la matière granulaire.

4. Structure suivant la revendication 3, caractérisée en ce que le réseau d'éléments de dessin se répète à des intervalles réguliers.

5. Structure suivant l'une quelconque des revendications précédentes, caractérisée en ce que la matière granulaire (34) est de la silice hydrophobe.

6. Structure suivant l'une quelconque des revendications précédentes, caractérisée en ce que la matière granulaire (34) a une taille de particules d'environ 18 nm.

7. Structure suivant l'une quelconque des revendications précédentes, caractérisée en ce que la couche de matière granulaire (34) consiste essentiellement en une bouillie constituée d'une matière granulaire hydrophobe, d'un solvant polaire et d'un solvant non polaire, le solvant polaire et le solvant non polaire étant présents en des proportions relatives suffisantes pour permettre le dépôt de la matière granulaire hydrophobe suivant un dessin bien déterminé sur la bande thermoplastique.

8. Structure suivant la revendication 7, caractérisée en ce que le solvant polaire est un alcool aliphatique.

9. Structure suivant la revendication 7, caractérisée en ce que le solvant polaire est du butanol.

10. Structure suivant les revendications 7 à 9, caractérisée en ce que le solvant non polaire est une essence minérale.

11. Structure suivant les revendications 7 à 10, caractérisée en ce que le solvant polaire est présent en une quantité d'environ 10 à environ 30% de la bouillie, et le solvant non polaire est présent en une quantité allant d'environ 40% à environ 70% de la bouillie.

12. Structure suivant l'une quelconque des revendications 7 à 11, caractérisée en ce que le solvant polaire est utilisé en une quantité d'environ 15% de la bouillie.

13. Structure suivant l'une quelconque des revendications 7 à 10, caractérisée en ce que la bouillie comprend environ 15 à environ 35% de la matière granulaire hydrophobe, environ 15 à environ 30% du solvant polaire susdit, et environ 40% à environ 70% du solvant non polaire précité.

14. Structure suivant l'une quelconque des revendications 7 à 12, caractérisée en ce que la bouillie comprend un épaississant thixotropique.

15. Structure suivant l'une quelconque des revendications précédentes, caractérisée en ce que la matière dorsale (32) consiste essentiellement en un système polymère, à base d'eau.

16. Structure suivant la revendication 15, caractérisée en ce que la matière dorsale comprend une proportion majeure d'un copolymère acrylique/uréthanne.

17. Structure suivant la revendication 15, caractérisée en ce que la matière dorsale (32) comprend une proportion majeure d'un système polymère acrylique flottant.

18. Structure suivant la revendication 15, caractérisée en ce que la couche dorsale (32) comprend au départ les constituants suivants:

(a) une émulsion flottante d'un copolymère d'acrylique/uréthanne dans une proportion d'environ 69% à environ 80%,

(b) un agent de blanchiment en une proportion d'environ 21 à environ 24%,

(c) un agent antimousse dans une proportion d'environ 0,4 à environ 0,6%,

(d) un agent épaississant à base d'acrylique dans une proportion d'environ 1,5 à 2,5%, et

(e) un agent de réglage du pH en une proportion allant jusqu'à environ 0,3%.

19. Structure suivant la revendication 15, dans laquelle la matière dorsale (32) comprend au départ les constituants suivants:

(a) un système acrylique polymère flottant dans une proportion d'environ 42 à environ 62%,

(b) de l'eau en une proportion d'environ 2 à environ 12%,

(c) un agent anti-peaux dans une proportion d'environ 1,5 à environ 2,5%,

(d) un agent de blanchiment en une proportion d'environ 5 à environ 36%,

(e) un agent de matité en une proportion d'environ 3 à environ 5%,

(f) un agent régulateur du pH en une proportion d'environ 0,3 à environ 0,5%,

(g) un agent antimousse en une proportion d'environ 0,6 à environ 1,0%,

(h) un solvant coalescent en une proportion d'environ 1,0 à 1,6%, et

(i) un épaississant en une proportion allant jusqu'à 3,6%.

20. Structure suivant l'une quelconque des revendications précédentes, caractérisée en ce que le dessin du type en coin de cube comprend un réseau d'éléments en coin de cube qui se répète à des intervalles réguliers.

21. Structure suivant l'une quelconque des revendications précédentes, comprenant en outre:

une couche d'adhésif (36) appliquée à la matière dorsale (32) et de même étendue que celle-ci, et une couche de démoulage ou de libération (38) fixée de manière libérable à la couche adhésive.

22. Structure suivant la revendication 3, caractérisée en ce que les éléments (44) du dessin sont carrés.

23. Structure suivant la revendication 3, caractérisée en ce que les parcours (42) sont rectangulaires.

24. Structure suivant la revendication 3, caractérisée en ce que chaque élément de dessin (44) est un carré ayant des côtés de 5 mm, chaque parcours (42) étant d'une largeur de 0,38 mm.

25. Structure suivant la revendication 3, caractérisée en ce que chaque élément de dessin (44) est un carré ayant des côtés de 3,5 mm, chaque parcours (42) étant d'une largeur de 0,69 mm.

26. Structure suivant la revendication 3, caractérisée en ce que chaque élément de dessin (44) est un carré ayant des côtés de 2,4 mm, chaque parcours (42) étant d'une largeur de 0,74 mm.

27. Procédé de production d'une structure de feuille stratifiée rétroréfléchissante suivant la revendication 1, comprenant les phases suivantes:

(a) le dépôt sur la seconde face (30) de la bande thermoplastique (26), d'une couche de matière granulaire hydrophobe (34) recouvrant des parties choisies du dessin rétroréfléchissant, tout en laissant les parties restantes de la seconde face (30) sans la matière granulaire,

(b) l'application d'une couche de matière dorsale (32) pour recouvrir la matière granulaire (34) et pour entrer en contact avec les parties restantes susdites, et

(c) le durcissement de la matière dorsale (32) pour encapsuler la matière granulaire (34) entre la seconde face (30) et la couche dorsale durcie.

28. Procédé suivant la revendication 27, caractérisé en ce qu'il comprend le réglage de la quantité de lumière incidente réfléchie depuis la première (28) de la bande (26), sans modification du dessin rétroréfléchissant, par un calibrage et une conformation appropriés des parties restantes susdites pour recouvrir une proportion choisie de l'aire superficielle de la seconde face (30).

FIG.3

FIG.2

FIG.1

FIG. 4

FIG. 5

FIG. 6